# EUROPÄISCHE PATENTSCHRIFT

(11) **EP 3 602 144 B1**
(45) Veröffentlichungstag und Bekanntmachung des Hinweises auf die Patenterteilung: **15.12.2021**
(21) Anmeldenummer: 18713210.5
(22) Anmeldetag: 22.03.2018
(51) Int. Cl.: G01V 3/12, G01S 13/88, G01S 7/40

(54) **RADARSYSTEM MIT RÄUMEINRICHTUNG**
RADAR SYSTEM HAVING A CLEARING DEVICE
SYSTÈME RADAR MUNI D'UN DISPOSITIF DE DÉGAGEMENT

(30) Priorität: 30.03.2017 DE 102017106851
(43) Veröffentlichungstag der Anmeldung: 05.02.2020
(73) Patentinhaber: Geopraevent AG, 8005 Zürich (CH)
(72) Erfinder: MEIER, Lorenz, 8057 Zürich (CH); JÄGER, Dominik, 8049 Zürich (CH); BLATTMANN, Bernhard, 8049 Zürich (CH)
(74) Vertreter: Müller Hoffmann & Partner
(86) Internationale Anmeldenummer: PCT/EP2018/057324
(87) Internationale Veröffentlichungsnummer: WO 2018/177887

(56) Entgegenhaltungen:
- EP-A1- 2 000 826
- DE-A1- 19 850 639
- JP-A- H10 329 653
- US-A1- 2015 094 908

## Beschreibung

Die Erfindung betrifft ein Radarsystem nach Anspruch 1 zum Erfassen von Objektbewegungen in einem vorbestimmten Zielbereich.

Ein derartiges Radarsystem kann vielfältig eingesetzt werden, etwa zur Detektion von Personen, Fahrzeugen und/oder Flugzeugen bzw. von Gruppen solcher Einzelobjekte, aber auch zur Detektion von sogenannten Massenbewegungen, wie etwa Erdmassen (Erdrutsch, Murgänge), Felsmassen (Steinschlag), Schneemassen (Lawine) und dergleichen.

Bei einem solchen Radarsystem besteht regelmäßig das Problem, dass die Detektion bzw. Erkennung einer gewünschten Objektbewegung verfälscht oder verunmöglicht wird, wenn sich auf einer Abdeckung für die Sendeeinheit und die Empfangseinheit, bzw. einer Abdeckung der Radareinheit, die auch als Radom bezeichnet werden kann, Ablagerungen oder Anhaftungen bilden, insbesondere in Form von Wassertropfen, Schnee oder Eis.

Aus der JPH11211821 (A) ist es bekannt, bei einem Radar einen Wischer einzusetzen, der in Abhängigkeit einer gemessenen Temperatur betätigt wird, wobei der

Wischer insbesondere bei kalten Temperaturen und bei möglicher Schneebildung eingesetzt wird.

Ein Radarsystem entsprechend des Oberbegriffs des Anspruchs 1 ist in der DE19850639 A1 offenbart.

Da durch die Radareinheit, insbesondere deren Sendeeinheit, elektromagnetische Strahlung ausgesendet wird, kann die empfangene, insbesondere reflektierte Strahlung unmittelbar auch dazu genutzt werden, Informationen in Bezug auf bewegliche oder statische Anhaftungen oder Ablagerungen an der Abdeckung der Radareinheit zu erhalten. Somit kann das Betätigen einer Räumvorrichtung unabhängig von einem gemessenen Temperaturwert erfolgen. Entsprechend ist es beispielsweise auch möglich, Ablagerungen von Wassertropfen zu detektieren und ggf. zu entfernen, wenn die Umgebungstemperatur deutlich höher als 0°C. liegt. Ferner kann mit einem solchen System auch das Vorhandensein von weiteren Ablagerungen, wie etwa feuchter Schmutz, Exkremente von Vögeln und dergleichen detektiert werden.

Damit die Sendeeinheit und die Empfangseinheit zur Umgebung hin besser oder gar vollständig geschützt werden können, wird vorgeschlagen, dass die Sendeeinheit und die Empfangseinheit in einem Radargehäuse angeordnet sind, wobei das Radargehäuse zumindest eine Basis und die Abdeckeinrichtung aufweist.

Die Basis und die Abdeckeinrichtung sind dabei insbesondere lösbar miteinander verbunden, beispielsweise durch eine Formschlussverbindung, wie etwa Clip- oder Rastverbindung, oder durch wenigstens eine Schraubverbindung oder dergleichen. Es wird in Bezug auf die Sendeeinheit und die Empfangseinheit darauf hingewiesen, dass diese insbesondere als Sendeantenne bzw. Empfangsantenne ausgebildet sein können. Bevorzugt sind sie als sogenannte Patchantennen ausgeführt. Ferner wird darauf hingewiesen, dass die Sendeeinheit und die Empfangseinheit sowohl getrennte (elektronische) Bauteile sein können, als auch als Sende- /Empfangseinheit in einem gemeinsamen (elektronischen) Bauteil integriert sein können.

Die Auswerteeinheit kann dazu eingerichtet sein, eine Amplitude von reflektierter elektromagnetischer Strahlung zu bestimmen oder/und eine Differenz von reflektierter elektromagnetischer Strahlung zu bestimmen, die durch verschiedene Empfangseinheiten empfangen worden ist. Die Detektion von Anhaftungen bzw. Ablagerungen kann also unter Verwendung von reflektierter Strahlung auf eine gewünschte Art und Weise erfolgen, die je nach Typ der Radareinheit, insbesondere mit mehreren Sende-/Empfangseinheiten, so angepasst werden können, dass zuverlässige Ergebnisse bereitgestellt werden können.

Erfindungsgemäß ist die Räumeinheit als Gebläsevorrichtung ausgebildet, diedazu eingerichtet ist, einen Fluidstrom entlang der Außenfläche der Abdeckeinrichtung zu erzeugen, um anhaftende oder anliegende Wassertropfen oder Schneeansammlungen zu entfernen. Durch einen Fluidstrom, insbesondere einen Luftstrom, entlang der Außenfläche können zum einen anhaftende Wassertropfen oder Schneeflocken bzw. Schneeansammlungen von der Außenfläche weg befördert werden, und zum anderen kann bei dauerhaftem Betrieb des Gebläses ein Abdrängen von Niederschlag erreicht werden, bevor der Niederschlag die Außenfläche erreicht. Ein weiterer Vorteil einer Gebläsevorrichtung ist darin zu sehen, dass die Fluidströmung (Luftstrom) im Gegensatz zu einem Wischer keinen Einfluss auf das Aussenden und Empfangen von elektromagnetischer Strahlung hat. Anders ausgedrückt verfälscht eine Fluidströmung die elektromagnetische Strahlung nicht, wohingegen ein Wischer ein Hindernis beim Aussenden und Empfangen von elektromagnetischer Strahlung darstellt. Ferner gibt es mit dem Fluidstrom keinen mechanischen Kontakt, wodurch die Gefahr einer Beschädigung der Abdeckeinrichtung bzw. Radoms verringert wird.

Die Gebläsevorrichtung kann im Bereich eines ersten Randes der Abdeckeinrichtung angeordnet sein und eine Hauptströmungsrichtung des Fluidstroms kann zu einem zweiten Randbereich gerichtet sein, wobei der zweite Randbereich dem ersten Randbereich gegenüber liegt. Dabei kann die Radareinheit in einem montierten Zustand so ausgerichtet sein, dass der erste Randbereich höher liegt als der zweite Randbereich. Die Radareinheit und damit auch die Abdeckeinrichtung ist bezogen auf eine Horizontale bzw. Vertikale in der Regel geneigt ausgerichtet, wobei die Neigung davon abhängt, wo die Radareinheit aufgestellt ist, wie groß das zu überwachende Zielgebiet ist und welcher Höhenunterschied zwischen Aufstellort und Zielgebiet vorliegt.

In einer möglichen alternativen Bauweise, die keinen Teil der vorliegenden beanspruchten Erfindung darstellt, kann die Räumeinrichtung als Wischvorrichtung ausgebildet sein, die wenigstens einen relativ zum Gehäuse beweglichen Wischerarm aufweist, der dazu eingerichtet ist, entlang der Außenfläche der Abdeckeinrichtung und in Kontakt mit der Außenfläche hin und her bewegt zu werden. Dabei soll ebenfalls auf der Basis von empfangener elektromagnetischer Strahlung bestimmt werden, ob an der Außenfläche Ablagerungen vorhanden sind oder nicht, und entschieden werden, ob die Wischvorrichtung aktiviert wird oder nicht

Dabei kann die Wischvorrichtung wenigstens eine Antriebsvorrichtung aufweisen, die mit dem wenigstens einen Wischerarm gekoppelt ist.

In dieser alternativen Bauweise ist es auch möglich, dass der Wischerarm von einem ersten Randbereich der Abdeckeinrichtung zu einem zweiten Randbereich der Abdeckeinrichtung beweglich, insbesondere linear verschiebbar ist, wobei der erste Randbereich und der zweite Randbereich gegenüber angeordnet sind. Ein solcher Wischerarm kann beispielsweise von einem oberen Randabschnitt der Abdeckeinrichtung zu einem unteren Randabschnitt der Abdeckeinrichtung beweglich sein, so dass Anhaftungen bzw. Ablagerungen in einer Wischbewegung von oben nach unten entfernt werden können.

Alternativ kann der Wischerarm von einem ersten Randbereich der Abdeckeinrichtung zu einem dritten Randbereich der Abdeckeinrichtung beweglich, insbesondere schwenkbar ist, wobei der erste Randbereich und der dritte Randbereich geneigt zueinander angeordnet sind, insbesondere im Wesentlichen orthogonal zueinander angeordnet sind. Ein solcher Wischerarm kann beispielsweise von einem oberen Randabschnitt zu einem seitlichen Randabschnitt beweglich bzw. verschwenkbar sein, so dass durch den Wischerarm ein Bereich gewischt wird, der in etwa die Form eines Viertelkreises aufweist.

Ferner kann daran gedacht werden, an der Radareinheit wenigstens eine Düse vorzusehen, durch die ein Enteisungsmittel auf die Abdeckeinrichtung aufgetragen werden kann. Eine solche Düse kann beispielsweise an einem Wischerarm angebracht sein. Denkbar ist aber auch das Anbringen einer solchen Düse für Enteisungsmittel in Kombination mit einem Gebläse. Dabei kann der Luftstrom insbesondere auch dazu genutzt werden, Enteisungsmittel entlang der Außenfläche der Abdeckeinrichtung zu verteilen.

Erfindungsgemäß ist die Gebläsevorrichtung und die Radareinheit an einem gemeinsamen Strömungsbauteil angebracht, das wenigstens eine Ansaugöffnung aufweist, durch die Umgebungsluft in das Strömungsbauteil gelangt, und das derart ausgebildet ist, dass angesaugte Umgebungsluft nach Umlenkung durch die Gebläsevorrichtung als Fluidstrom entlang der Außenfläche der Abdeckeinrichtung austritt. Das Strömungsbauteil kann auch als gemeinsames Gesamtgehäuse für die Radareinheit und die Gebläsevorrichtung bezeichnet werden.

Dabei kann das Strömungsbauteil bezogen auf die an einer Vorderseite des Strömungsbauteils angebrachte Radareinheit eine untere Ansaugöffnung oder/und eine hintere Ansaugöffnung aufweisen. Die Ansaugöffnung bzw. Ansaugöffnungen sind dabei so angeordnet, dass das Ansaugen von bzw. Anhaften von Niederschlag, wie etwa Schneeflocken, möglichst vermieden wird. Sind eine untere und eine hintere Ansaugöffnung vorgesehen, kann gewährleistet werden, dass unabhängig von herrschenden Witterungsverhältnissen, wie etwa Schneeverwirbelungen, in der Regel eine der Ansaugöffnungen frei bleibt. An der Ansaugöffnung kann eine Schutzvorrichtung, etwa in Form eines Lochblechs oder dergleichen vorgesehen sein. Ferner kann an der Ansaugöffnung eine Filtervorrichtung vorgesehen sein, die sich in Strömungsrichtung an die Schutzvorrichtung anschließt.

Das Strömungsbauteil kann insgesamt einen von der Ansaugöffnung bis zur Gebläsevorrichtung geschlossenen Strömungweg bilden. Dabei strömt angesaugte Luft hinter der Radareinheit von unten nach oben zur Gebläsevorrichtung, wobei die angesaugte Luft durch die Gebläsevorrichtung nach vorne und unten umgelenkt wird und als Fluidstrom entlang der Vorderseite der Radareinheit wieder austritt.

Die Ansaugöffnung kann derart dimensioniert sein, dass die Geschwindigkeit von angesaugter Umgebungsluft möglichst gerin ist, insbesondere nur so groß ist, dass in der Umgebungsluft vorhandener Niederschlag, wie etwa Regentropfen oder Schneeflocken, nicht in Richtung der Ansaugöffnung mitgerissen werden.

Das Strömungsbauteil kann ferner derart ausgebildet sein, dass es schwenkbar an einer Trägervorrichtung anbringbar oder angebracht ist. Dabei kann das Strömungsbauteil gemeinsam mit der Radareinheit und der Gebläsevorrichtung schwenkbar sein. Ein vorzugsweise einstellbarer Schwenkwinkel liegt in einem Bereich von 0° bis 50°.

An einem oberen Abschnitt des Strömungsbauteils kann ferner ein Schutzelement angebracht sein mit einem über die Radareinheit, insbesondere deren Außenfläche, hinausragenden Schutzvorsprung.

Die Außenfläche der Abdeckeinrichtung kann ferner auch eine hydrophobe Beschichtung aufweisen. Durch eine solche Beschichtung kann das Anhaften von Niederschlägen, insbesondere in Form von Wasser bzw. Schnee, verringert werden. Ferner kann in Kombination mit der Räumeinrichtung ein verbessertes Entfernen von Anhaftungen bzw. Ablagerungen erreicht werden.

Ferner kann die Radareinheit wenigstens eine Heizeinrichtung aufweisen, die dazu eingerichtet ist, im Bereich der Radareinheit eine Radartemperatur zu erzeugen, die über der herrschenden Umgebungstemperatur liegt, insbesondere eine Radartemperatur zu erzeugen, die bei mehr als 0° Celsius liegt. Es wird insbesondere daran gedacht, dass die Abdeckeinrichtung eine Temperatur von mehr als 0°C. aufweist, so dass ein Anhaften und Ablagern von Schnee bei Umgebungstemperaturen von weniger als 0°C. Umgebungstemperatur verringert wird. Ferner wird das Entfernen von Anhaftungen bzw. Ablagerungen entlang der erwärmten Abdeckeinrichtung mittels des Gebläses bzw. der Wischvorrichtung ebenfalls erleichtert.

Es ist in diesem Zusammenhang auch denkbar, dass durch die Gebläsevorrichtung ein erwärmter Fluidstrom erzeugt wird, der entlang der Außenfläche der Abdeckeinrichtung strömt.

Eine Heizvorrichtung hat im Übrigen den weiteren Vorteil, dass die im Gehäuse der Radareinheit untergebrachten elektronischen Bauteile auf einer gewünschten Betriebstemperatur gehalten werden können, insbesondere wenn die Umgebungstemperatur weniger als 0°C. beträgt

Es wird weiter vorgeschlagen, dass das Radarsystem wenigstens eine Temperaturmesseinheit aufweist, die dazu eingerichtet ist, die Umgebungstemperatur zu bestimmen, wobei das Radarsystem dazu eingerichtet ist, die Heizeinrichtung in Abhängigkeit einer gemessenen Umgebungstemperatur einzuschalten oder auszuschalten.

Neben der Messung der Umgebungstemperatur kann auch die Temperatur innerhalb des Gehäuses der Radareinheit oder an der Außenfläche der Abdeckeinrichtung mittels eines weiteren Temperatursensors gemessen werden. In einem solchen Fall ist es möglich, dass die Heizvorrichtung in Abhängigkeit von gemessenen Umgebungstemperaturen oder Innentemperaturen (im Gehäuse) geregelt werden kann, um eine optimale Betriebstemperatur für die Radareinheit zu ermöglichen.

Das Radarsystem kann ferner auch wenigstens eine Bildaufnahmeeinrichtung aufweisen, die dazu eingerichtet ist, eine Bild von wenigstens einem Teil der Au-ßenfläche aufzunehmen und das Bild an die Auswerteeinheit zu übertragen. In einem solchen Fall kann die Auswerteeinheit auch dazu eingerichtet sein, ein aufgenommenes Bild automatisiert auszuwerten und zu bestimmen, ob auf der Au-ßenfläche Ablagerungen vorhanden sind oder nicht und zu entscheiden, ob die Räumeinrichtung aktiviert wird oder nicht. Das Vorsehen einer Bildaufnahmeeinrichtung stellt dabei eine vorteilhafte Ergänzung dar, die es ermöglicht, den Zustand der Außenfläche der Radareinheit auch durch eine Bedienperson an einem entfernten Rechner zu überprüfen, wobei eine solche Überprüfung unabhängig von der Funktion der Radareinheit erfolgen kann, etwa wenn die Radareinheit fehlerhaft arbeitet.

Als Bildaufnahmeeinrichtung kann auch eine Wärmebildkamera eingesetzt werden. Mittels einer Wärmebildkamera können im Vergleich zur Radareinheit kühlere Niederschläge, wie beispielsweise anhaftende Schneeflocken oder Regentropfen, zuverlässig detektiert werden, weil mittels der Wärmebildkamera ein Abbild der Temperaturverteilung erzeugt wird. Ein solches Temperaturverteilungsbild kann in der Regel noch besser automatisiert ausgewertet werden, als ein übliches Bild der Radareinheit.

Die Bildaufnahmeeinrichtung kann an einer der Radareinheit zugewandten Innenseite des Schutzelements, insbesondere des Schutzvorsprungs, angebracht sein. Dabei kann die Bildaufnahmeeinrichtung beispielsweise als in einem halbkugelartigen Gehäuse aufgenommene Deckenkamera ausgebildet sein, wobei die Innenseite des Schutzvorsprungs als "Decke" zum Anbringen der Bildaufnahmeeinrichtung dienen kann. Durch das Anbringen der Bildaufnahmeeinrichtung an dem Schutzelement kann die Bildaufnahmeeinrichtung nahe an der Radareinheit angeordnet werden und ist gegen Witterungseinflüsse weitestgehend geschützt. Um den Schutz noch weiter zu verbessern kann das Schutzelement geneigte Seitenschutzabschnitte aufweisen.

Die Bildaufnahmeeinrichtung kann ferner gemeinsam mit dem Strömungsbauteil schwenkbar sein. Durch das Anbringen der Radareinheit, der Gebläsevorrichtung und optional der Bildaufnahmeeinrichtung an dem Strömungsbauteil mit dem optionalen Schutzelement können diese Komponenten relativ zueinander fixiert bleiben unabhängig davon, mit welchem Schwenkwinkel das Strömunsbauteil realtiv zu einer übergeordneten Trägerstruktur ausgerichtet wird. Die Radareinheit und die Gebläsevorrichtung können zusammen mit dem Strömungsbauteil, gegebenenfalls auch mit dem optionalen Schutzelement, auch eine Art Modul bilden, das vor einer Außeninstallation an einem Fabrikationsort fertig zusammengebaut werden kann.

Bei dem Radarsystem kann die Auswerteeinheit über ein Netzwerk mit einer Zentraleinheit verbunden sein, wobei die Zentraleinheit dazu eingerichtet ist, dass einer Bedienperson Informationen der Radareinheit, insbesondere über detektierte Bewegungen, Massebewegungen, Temperatur, Vorhandensein von Ablagerungen und dergleichen, bereitgestellt werden können. Die Zentraleinheit kann ein Computerserver sein. Mit diesem Server können verschiedene Ein-/Ausgabegeräte, wie beispielsweise Display und Tastatur, mobiler Computer (Laptop, Tablet, Smartphone) verbunden sein, auf denen eine Bedienperson Darstellungen von Informationen bereitgestellt bekommt, die auf den Daten des Radarsystems bzw. der Radareinheit beruhen.

Die Erfindung wird nachfolgend unter Bezugnahme auf die anliegenden Figuren genauer beschrieben.
Fig. 1 zeigt in den Teilfiguren a) und b) rein schematisch und vereinfacht ein Radarsystem und dessen Funktion.
Fig. 2 zeigt eine erste Ausführungsform einer Radareinheit mit einer Gebläsevorrichtung.
Fig. 3 zeigt eine Radareinheit mit einer anderen Gebläsevorrichtung.
Fig. 4 zeigt eine Radareinheit mit einer weiteren Gebläsevorrichtung.
Fig. 5 zeigt eine Radareinheit mit einer Wischvorrichtung.
Fig. 6 zeigt eine Radareinheit mit einer anderen Wischvorrichtung.
Fig. 7 zeigt in den Teilfiguren A) und B) jeweils ein Prinzipdiagramm einer Radareinheit.
Fig. 8 zeigt in einer vereinfachten und schematischen Perspektivdarstellung eine Radareinheit mit Gebläsevorrichtung und Strömungsbauteil.
Fig. 9 zeigt eine vereinfachte und schematische Schnittdarstellung etwa entlang der Schnittlinie IX-IX der Figur 8.

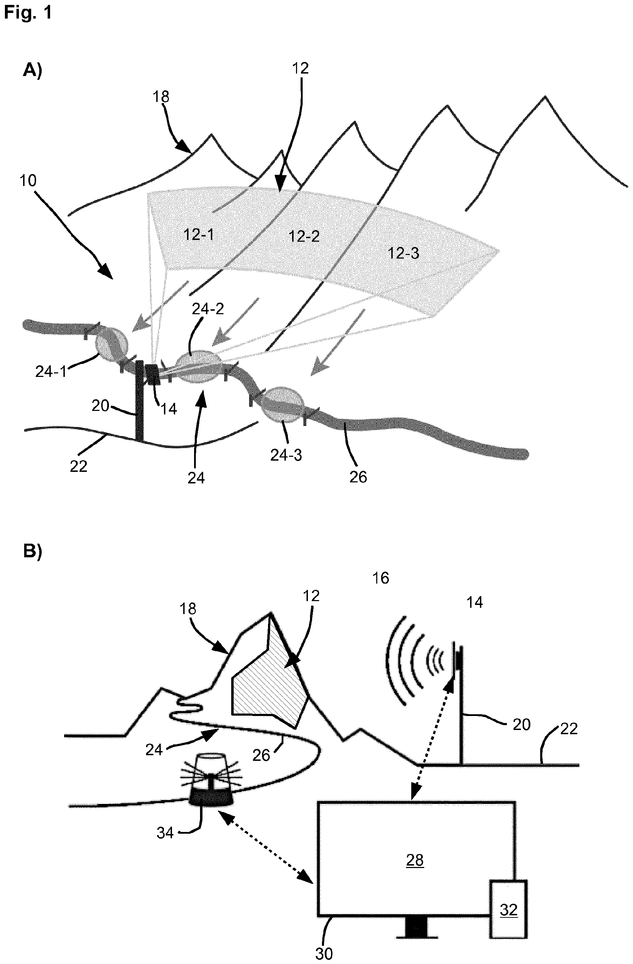

In den Fig. 1a) und 1b) ist vereinfacht und schematisch ein Radarsystem 10 dargestellt, das dazu eingerichtet ist, Objektbewegungen in einem Zielgebiet 12 zu erfassen. Das Radarsystem 10 umfasst wenigstens eine Radareinheit 14. Die Radareinheit 14 sendet und empfängt elektromagnetische Strahlung 16 (Radarwellen) aus, um das Zielgebiet 12 in Bezug auf Objektbewegungen abzutasten bzw. zu scannen. Üblicherweise weist das Zielgebiet eine Fläche auf, die bis zu mehrere Quadratkilometer betragen kann. Derzeit sind beispielsweise Zielgebietsflächen von etwa 0,1km² bis etwa 10km² üblich. Dabei ist zu beachten, dass durch den Einsatz von mehreren Radareinheiten durchaus auch größere Zielgebiete überwacht werden können. Das Zielgebiet 12 kann unter Bezugnahme auf die Fig. 1a) in mehrere interessierende Teilgebiete 12-1, 12-2, 12-3 unterteilt werden. Solche Teilgebiete 12-1, 12-2, 12-3 können beispielsweise Bereiche eines Hangs in einer bergigen Umgebung 18 sein, an denen Massenbewegungen zu erwarten sind, wie beispielsweise Lawinen, Murgänge, Felsstürze oder dergleichen.

Die Radareinheit 14 ist üblicherweise an einer übergeordneten Struktur 20, wie beispielsweise einem Masten, einem Rahmen, einem Gebäude oder dergleichen, befestigt. Diese Struktur 20 ist in der Regel fest im Untergrund 22 verankert. Üblicherweise wird die Radareinheit 14 in einer gewissen Entfernung von dem Zielgebiet 12 aufgestellt. Das Zielgebiet 12 liegt im vorliegenden Beispiel oberhalb eines zu schützenden Gebietes 24. Das zu schützende Gebiet 24 kann beispielsweise eine Siedlung, eine Straße 26, eine Bahnlinie, eine Skipiste oder dergleichen sein.

Die Radareinheit 14 umfasst wenigstens eine Sendeeinheit (Sendeantenne) und wenigstens eine Empfangseinheit (Empfangsantenne) zum senden bzw. empfangen von elektromagnetischer Strahlung (Radarwellen) 16. Die über das Zielgebiet 12 erfassten Daten bzw. Radarsignale können insbesondere mittels einer in der Näher der Radareinheit vorgesehenen oder in der Radareinheit integrierten Auswerteeinheit an einen Zentralrechner 28 übertragen werden, der in Fig. 1b) durch ein Display 30 illustriert ist. Die von der Radareinheit erfassten und insbesondere durch die Auswerteeinheit übermittelten Daten können durch die Zentraleinheit 28 verarbeitet und interessierenden Bedienpersonen in einer aufbereiteten Form bereitgestellt werden. Diese Daten können von dem Zentralrechner 28 auch an mobile Endgeräte 32, wie etwa Tabletcomputer, Notebook, Smartphone übertragen werden. Denkbar ist aber auch, dass die Auswerteeinheit so eingerichtet ist, dass sie direkt mit einem mobilen Endgerät kommunizieren kann, um Informationen zu übermitteln.

Wird über die Auswertung der durch die Radareinheit 14 erfassten Daten ermittelt, dass im Zielgebiet 12 eine Objektbewegung stattfindet, z.B. dass sich im Zielgebiet 12 eine Lawine löst, kann durch den Zentralrechner ein Alarm ausgelöst werden, was durch das Blinklicht 34 in Fig. 1b) illustriert ist. Zusätzlich zu einer Alarmierung von Personen oder/und öffentlichen Stellen (Behörden), etwa per Kurzmitteilung auf ein Mobiltelefon oder dergleichen, können auch weitere Maßnahmen automatisiert ausgelöst werden, wie beispielsweise Streckensperrungen durch Signalanlagen 36, wie etwa Ampeln, Barrieren oder dergleichen. Dabei ist das Radarsystem derart eingerichtet, dass es beispielsweise für ein Zielgebiet 12 der Fig. 1a) bestimmen kann, ob die Objektbewegung in einem oder mehreren der Teilgebiete 12-1, 12-2, 12-3 festgestellt worden ist, so dass für einen entsprechend betroffenen Bereich 24-1, 24-2, 24-3 ein Alarm ausgegeben werden kann und der bestreffende Teilbereich 24-1, 24-2, 24-3 gesichert werden kann.

Die Radareinheit 14 ist in der Regel sehr wechselhaften Witterungsbedingungen ausgesetzt, insbesondere ist sie Niederschlägen, wie Regen und Schnee, und starken Temperaturschwankungen ausgesetzt. Ferner ist die Radareinheit 14 üblicherweise in einem Gebiet aufgestellt, das auf einer geringeren Höhe über Meer liegt als das zu beobachtende Zielgebiet 12. Entsprechend ist die Radareinheit 14 in der Regel geneigt an der Struktur 20 angebracht. Eine in Fig. 1b) dargestellte vertikale Ausrichtung der Radareinheit 14 ist eher unüblich und ist in der Fig. 1b) der schematischen Darstellungsweise geschuldet. Dabei bildet die Radareinheit 14, insbesondere mit einer Außenfläche eine Art schiefe Ebene im Raum. Auf dieser Außenfläche bzw. schiefen Ebene können sich Ablagerungen und Anhaftungen von Wasser, Schnee, Eis und sonstigen Partikeln bilden, wodurch die elektromagnetische Strahlung beim Senden/Empfangen beeinflusst wird.

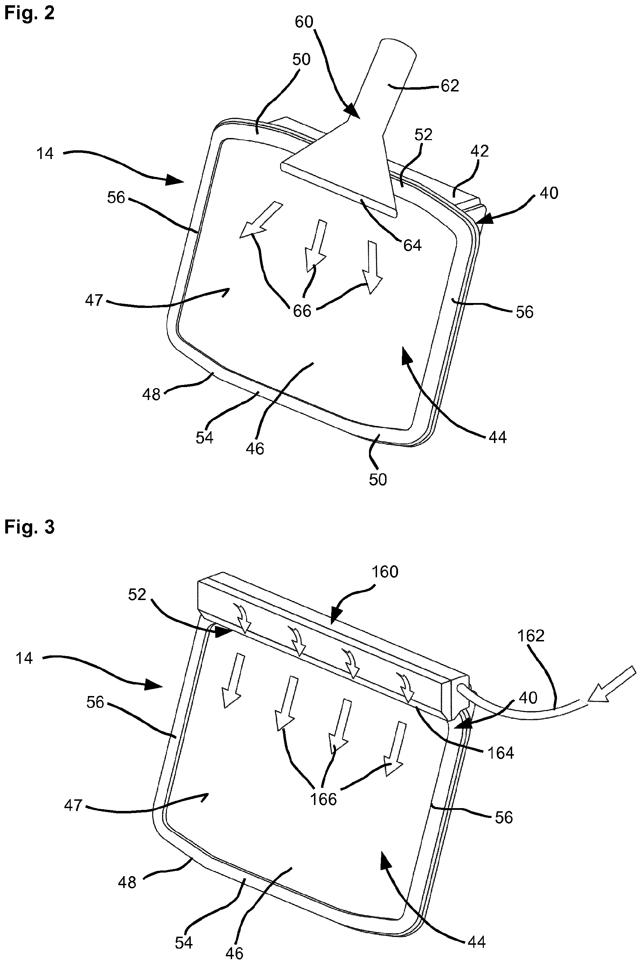

In Fig. 2 ist vereinfacht und schematisch eine Radareinheit 14 dargestellt. Die Radareinheit 14 weist ein Radargehäuse 40 auf. Das Gehäuse 40 umfasst eine Basis 42 und eine Abdeckeinrichtung 44, die miteinander insbesondere lösbar verbunden sind. In der Basis 42, die auch als Aufnahmebehälter oder Box bezeichnet werden kann, sind wenigstens eine Sendeeinheit (Sendeantenne) und wenigstens eine Empfangseinheit (Empfangsantenne) für elektromagnetische Strahlung untergebracht, die in der gewählten Darstellung nicht sichtbar sind. Die Sendeeinheit und die Empfangseinheit dienen dazu Radarwellen abzustrahlen und reflektierte Radarwellen wieder zu empfangen, um hieraus Informationen über Objektbewegungen im Zielgebiet detektieren zu können. Es ist klar, dass in der Basis 42 zusätzlich noch weitere Komponenten der Radareinheit aufgenommen sein können, wie beispielsweise Auswerteeinheit bzw. Steuereinrichtung, interne Stromquelle oder Anschluss für eine externe Stromquelle, wie etwa Akku, Solarpanel oder dergleichen. Denkbar ist aber auch, dass hinter einer Abdeckeinrichtung 44 bzw. in einem Radargehäuse 40 lediglich die Antennen zum Senden/Empfangen angeordnet sind. In einem solchen Fall sind die Antennen (Sendeeinheit bzw. Empfangseinheit) über entsprechende Verbindungen (Kabel) mit einer entfernten Auswerteeinheit bzw. Steuereinheit, Stromquelle oder dergleichen verbunden. Diese können beispielsweise in einem gesonderten Rechnergehäuse untergebracht sein, das entfernt von der Radareinheit mit den Antennen aufgestellt ist. Dabei kann die Entfernung zwischen den Antennen und den übrigen Komponenten in der Regel etwa 0,1 Meter bis etwa 15 Meter betragen.

Die Abdeckeinrichtung 44 umfasst eine Platte 46, im Wesentlichen eben ausgebildet sein oder die bezogen auf die Außenseite konvex ausgeführt sein kann. Im dargestellten Beispiel ist die Platte 46 von einem Rahmen 48 eingefasst. Die Abdeckeinrichtung 44 weist die Grundfläche eines Vielecks auf. Bevorzugt ist sie im Wesentlichen rechteckig ausgeführt. Aufgrund von vier leicht abgeschrägten bzw. geneigt verlaufenden Randabschnitten 50 kann die Grundfläche im dargestellten Beispiel auch als achteckig bezeichnet werden. Die Abdeckeinrichtung kann aber auch andere Formen aufweisen, insbesondere ist es auch denkbar, dass sie kreisförmig oder ellipsenförmig ausgebildet ist oder dass sie aus einer Mischform von geraden und geneigten oder gebogenen Kanten begrenzt wird. Beispielsweise kann das nachfolgend vorgestellte Konzept der Räumungseinrichtung auch für eine Hornantenne oder eine Patch-Antenne umgesetzt werden.

Die Abdeckeinrichtung 44 umfasst einen oberen Randabschnitt 52 und einen unteren Randabschnitt 54, die einander gegenüber liegen. Der obere Randabschnitt 52 und der untere Randabschnitt 54 sind durch seitliche Randabschnitte 56 miteinander verbunden. Die Verwendung der Begriffe oben und unten beziehen sich insbesondere auf eine montierte Ausrichtung der Radareinheit an einer Struktur 20 (Fig. 1). Dabei liegt der obere Randabschnitt 52 in der Regel höher als der untere Randabschnitt 54, wobei die ebene oder gewölbte Platte 46 im Raum zur Horizontalen und zur Vertikalen geneigt bzw. schief ausgerichtet ist.

Der oben beschriebene Aufbau der Radareinheit 14 gilt im Übrigen auch im Wesentlichen für die weiteren Figuren 2 bis 6, in denen gleiche Bezugszeichen für gleiche Elemente verwendet werden, ohne diese Elemente jedoch nochmals im Detail zu erklären.

Um Ablagerungen oder Anhaftungen von Niederschlägen, insbesondere von Wassertropfen, Schneeflocken, Eiskristallen, anderen Partikeln oder dergleichen zu verhindern bzw. zu reduzieren, umfasst die Radareinheit 14 eine hier vereinfacht und schematisch dargestellte Gebläsevorrichtung 60 als Räumeinrichtung. Die Gebläsevorrichtung 60 umfasst eine Fluidzuleitung 62 und eine Düse 64, um einen Fluidstrom 66 entlang der Abdeckeinrichtung 44, insbesondere entlang der Platte 46 bzw der Außenfläche 47 abzugeben. Die Gebläsevorrichtung 60 ist im Bereich des oberen Randabschnitts 52 angeordnet, so dass der die beschleunigte Luft 66 im Wesentlichen vom oberen Randabschnitt 52 zum unteren Randabschnitt 54 strömt. Durch die Anordnung der Gebläsevorrichtung 60 im Bereich des oberen Randabschnitts 52 kann das Verdrängen von anhaftendem Wasser oder Schnee durch die Wirkung der Schwerkraft noch unterstützt werden.

Es ist klar, dass die Gebläsevorrichtung 60 in geeigneter Weise mit dem Gehäuse 40 der Radareinheit verbunden ist, auch wenn dies hier aus Gründen der Übersichtlichkeit nicht im Detail dargestellt ist. Die Gebläsevorrichtung 60 umfasst ferner einen hier nicht sichtbaren Antrieb, um eine Art Propeller oder Impeller anzutreiben, so dass der gewünschte Fluidstrom 66 erzeugt werden kann. Es können insbesondere auch sogenannte Radialventilatoren bzw. Radialgebläse eingesetzt werden. Üblicherweise ist der erzeugte Fluidstrom 66 ein Luftstrom, insbesondere ein Luftstrom, der durch Ansaugen von Umgebungsluft erzeugt wird. Üblicherweise wird passiert die angesaugte Umgebungsluft dabei wenigstens eine Filtereinrichtung, so dass Schäden am Propeller bzw. Impeller beispielsweise durch Wasser oder Schmutzpartikel vermieden werden können.

Fig. 3 zeigt eine andere Ausgestaltung einer Gebläsevorrichtung 160 für eine Radareinheit 14. Auch diese Gebläsevorrichtung umfasst eine Fluidzufuhr 162 und eine Düse 164. Die Düse 164 ist in diesem Beispiel als sehr schmaler Schlitz ausgeführt, so dass ein Luftstrom 166 erzeugt werden kann, der mit hoher Geschwindigkeit entlang der Platte 46 erzeugt werden kann. Die Düse 164 ist insbesondere so ausgestaltet, dass der Luftstrom 166 als Luftklinge (Airblade) wirkt. Um hierzu eine ausreichende Beschleunigung der Luft zu erreichen, kann insbesondere auch daran gedacht werden, einen Kompressor für die Luftzufuhr einzusetzen. Auch in dieser Ausführungsform strömt die Luft 166 im Wesentlichen von dem oberen Randbereich 52 zu dem unteren Randbereich 54 der Abdeckeinrichtung 42, insbesondere der Platte 46 bzw. der Außenfläche 47.

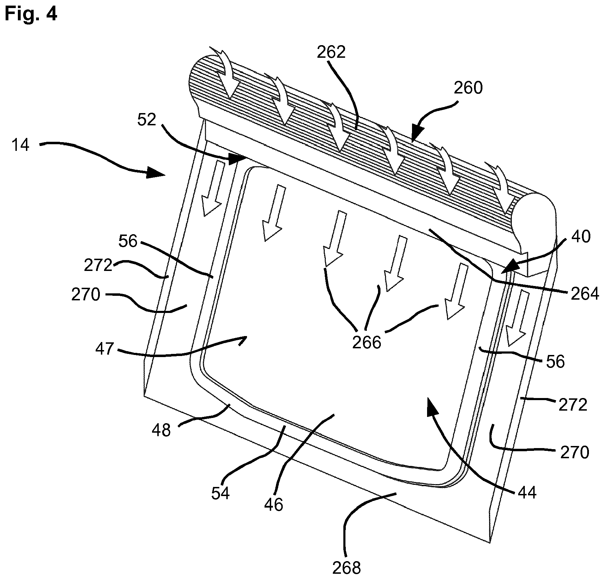

Fig. 4 zeigt eine weitere Ausführungsform einer Gebläsevorrichtung 260. Bei dieser Gebläsevorrichtung erfolgt die Zufuhr von Fluid, insbesondere Luft durch schlitzartige Fluidzufuhröffnungen 262. Die im Bereich dieser Fluidzufuhröffnungen 262 angesaugte Luft wird mittels einer innen liegenden Propelleranordnung im Bereich einer Düse 264 wieder ausgegeben, so dass ein beschleunigter Fluidstrom 266 abgegeben wird. Um den Fluid- bzw. Luftstrom 266 effektiver führen bzw. leiten zu können, ist um die Abdeckeinrichtung 42 Führungselement 268 angeordnet. Das Führungselement 268 ist entlang der seitlichen Randabschnitte 56 der Abdeckeinrichtung 42 geführt und bildet dort einen Luftströmungskanal 270. Der Luftströmungskanal 270 wird dabei insbesondere durch die seitlichen Randabschnitte 56 und jeweilige Führungswände 272 des Führungselements 268 gebildet. Da durch die Gebläsevorrichtung 260 eine Luftströmung über die gesamte Breite des Abdeckeinrichtung 42 hinaus erzeugt wird, nämlich auch in den Luftführungskanälen 270, ist die Wirkung des Luftstroms 266 in den seitlichen Randabschnitten 56 verbessert. Insbesondere kann ausströmende Luft 266 in seitlicher Richtung nicht so einfach ausweichen, so dass insgesamt die Effizienz der Luftströmung 266 verbessert wird.

Für alle Gebläsevorrichtungen 60, 160, 260 ist anzumerken, dass sie mit einer Stromquelle verbunden sind und dass sie durch eine hier nicht dargestellte Steuereinheit ein- oder ausgeschaltet werden können. Diese Aufgabe kann auch durch eine Steuereinheit der Radareinheit 14 übernommen werden. Das Einschalten bzw. Ausschalten der Gebläsevorrichtungen 60, 160, 260 erfolgt bei der Radareinheit 14 aufgrund von empfangener elektromagnetischer Strahlung, durch die bestimmt wird, ob an der Außenfläche 47 bzw. der Platte 46 Ablagerungen vorhanden sind oder nicht. Das Ein- bzw. Ausschalten der Gebläsevorrichtung 60, 160, 260 kann somit unabhängig von der Umgebungstemperatur und unter Auswertung von Daten erfolgen, die durch die Radareinheit 14 im Zuge der Abtastung des Zielgebiets 12 (Fig. 1) sowieso erzeugt werden.

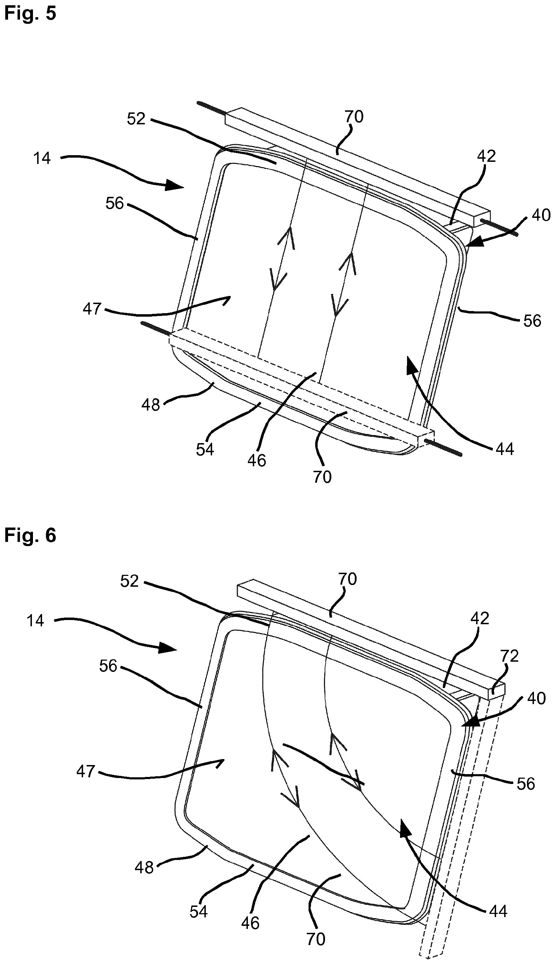

In den Fig. 5 und 6 sind alternative Räumeinrichtungen in der Form einer hier nur schematisch als Balken illustrierten Wischvorrichtung 70 für die Radareinheit 14 dargestellt. In dem Beispiel der Fig. 5 ist die Wischvorrichtung 70 vom oberen Randabschnitt 52 der Abdeckeinrichtung 42 zu dem unteren Randabschnitt 54 relativ zur Platte 46 bzw. der Außenfläche 47 hin und her beweglich. In dem Beispiel der Fig. 6 ist die Wischvorrichtung 70 um einen Drehpunkt 72 schwenkbar gelagert, so dass die Wischvorrichtung 70 zwischen dem oberen Randabschnitt 52 und dem rechten seitlichen Randabschnitt 56 beweglich ist. Natürlich kann der Drehpunkt 72 auch so angeordnet sein, dass die Wischvorrichtung 70 zum linken seitlichen Randabschnitt 56 bewegt werden kann.

Es ist klar, dass die Wischvorrichtung 70 eine Art Wischerblatt aus einem elastischen Material aufweist, das auf der Platte 47 bzw. der Außenseite 47 anliegt, so dass anhaftende Wassertropfen oder Schneeflocken meachnisch entfernt werden können. Wie bei den Gebläsevorrichtungen 60, 160, 260 wird über das Ein- und Ausschalten der Wischvorrichtung 70 entschieden aufgrund von empfangener elektromagnetischer Strahlung, durch die bestimmt wird, ob an der Außenfläche 47 bzw. der Platte 46 Ablagerungen vorhanden sind oder nicht.

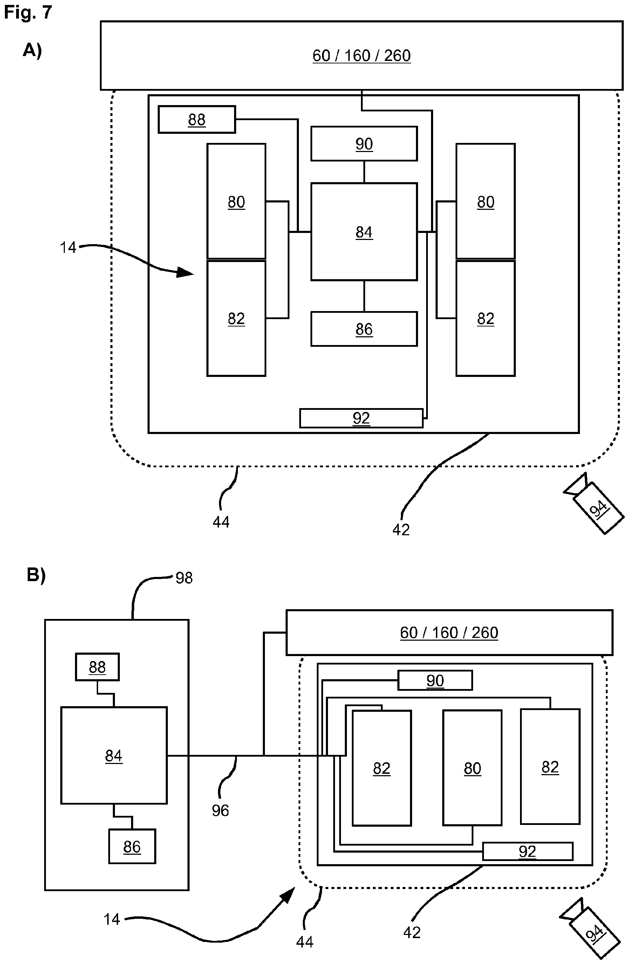

Fig. 7 zeigt in den Teilfiguren A) und B) rein schematisch, beispielhaft und nicht einschränkend den Aufbau von Radareinheiten 14 in einem jeweiligen Diagramm. Im Beispiel der Fig. 7A) sind die dargestellten Komponenten in der hier rechteckig dargestellten Basis 42 des Gehäuses aufgenommen. Die Abdeckeinrichtung 44 ist als abgerundetes gestricheltes Rechteck angedeutet. Die Radareinheit 14 umfasst beispielsweise zwei Sendeeinheiten 80 und zwei Empfangseinheiten 82, die dazu eingerichtet sind, Radarwellen auszusenden und reflektierte Radarwellen zu empfangen. Ferner umfasst die Radareinheit 14 eine Steuereinheit 84 (Auswerteeinheit), die dazu eingerichtet ist, die Sendeeinheiten 80 und die Empfangseinheiten 82 anzusteuern. Ferner kann die Steuereinheit 84 dazu eingerichtet sein, empfangene Daten bzw. Signale auszuwerten oder zum Zweck der Auswertung über eine Kommunikationsschnittstelle 86 einer entfernten Rechnereinheit, beispielsweise Zentralrechner 30 (Fig. 1), zur Verfügung zu stellen. Die Kommunikationsschnittstelle 86 ermöglicht insbesondere eine drahtlose Datenübertragung. Die Radareinheit 14 umfasst ferner auch eine Energieversorgung 88, die beispielsweise als Akku ausgeführt sein kann oder die als Anschluss an eine externe Energiequelle, wie etwa ein Solarpanel, eine Brennstoffzelle oder ein elektrisches Stromnetz, ausgebildet sein kann. Optional kann in der Radareinheit 14 ein Temperatursensor 90 vorgesehen sein, der dazu eingerichtet ist, eine Temperatur im Bereich der Radareinheit 14 zu erfassen. Dabei kann es sich um eine Temperatur innerhalb des Gehäuses oder/und eine Umgebungstemperatur handeln. Ferner kann der Radareinheit 14 optional auch eine Heizeinrichtung 92 zugeordnet werden, die dazu eingerichtet ist, die Radareinheit 14, insbesondere die Abdeckeinrichtung 44 zu erwärmen, um insbesondere ein Anhaften von Schnee und Eis zu verhindern. Eine Heizeinrichtung 92 kann beispielsweise im Gehäuse bzw. der Basis 42 aufgenommen sein oder sie kann in der Abdeckeinrichtung 44 selbst vorgesehen sein.

Aus der Darstellung der Fig. 7B) ist ersichtlich, dass durch die Abdeckeinrichtung 44 eine Sendeeinheit 80 und zwei Empfangseinheiten 82 abgedeckt sind. Die Abdeckeinrichtung 44 kann zusammen mit der Basis 42 in einem solchen Fall auch als Antennengehäuse bezeichnet werden. Die Sendeeinheit 80 und die Empfangseinheit 82 sind über eine Verbindung 96 mit der Auswerteeinrichtung bzw. Steuereinheit 84 verbunden. Die Steuereinheit 84 ist hier mit anderen Komponenten in einem eigenen Gehäuse 98 aufgenommen. Dies ermöglicht die Aufstellung der Steuereinheit 84 entfernt von der Radareinheit 14.

Wie bereits erläutert, zeigt die Fig. 7 lediglich prinzipiell mögliche Aufbauvarianten einer Radareinheit 14, ohne dass dieser Aufbau alle erwähnten Komponenten zwingend aufweisen muss. Die Anzahl von Sendeeinheiten 80 und Empfangseinheiten 82 kann auch kleiner oder größer als zwei sein. In einer bevorzugten Ausführungsform ist eine Sendeeinheit (Sendeantenne) mit mehreren Empfangseinheiten (Empfangsantennen), insbesondere mit zwei Empfangseinheiten vorgesehen, so wie dies in der Fig. 7B) angedeutet ist, wobei diese Kombination von Sende- und Empfangseinheiten 80, 82 auch die weiteren Komponenten in einem gemeinsamen Gehäuse aufweisen kann, so wie dies in der Fig. 7A) dargestellt worden ist. Welche Komponenten in dem hier durch Basis 42 und Abdeckeinrichtung 44 gebildeten Gehäuse untergebracht sind, ist wählbar und kann je nach Konfiguration des Radarsystems festgelegt werden.

Abschließend wird noch darauf hingewiesen, dass bei dem Radarsystem 10 wenigstens eine nicht im Detail dargestellte Bildaufnahmeeinrichtung 94 vorgesehen werden kann, die dazu eingerichtet ist, ein Bild von wenigstens einem Teil der Außenfläche 47 bzw. der Platte 46 der Radareinheit 14 aufzunehmen und das Bild an die Steuereinheit 84 zu übertragen. Als Bildaufnahmeeinrichtung 94 kann auch eine Wärmebildkamera eingesetzt werden, um ein Abbild der an der Radareinheit herrschenden Temperaturverteilung zu erfassen und auswerten zu können.

Das hier vorgestellte Radarsystem ist insbesondere dafür ausgelegt unter verschiedenen Witterungsbedingungen eingesetzt zu werden, wobei die Räumeinrichtung, insbesondere in Form eines Gebläses oder eines Wischers, in Abhängigkeit von reflektierter Radarstrahlung ein- oder ausgeschaltet wird.

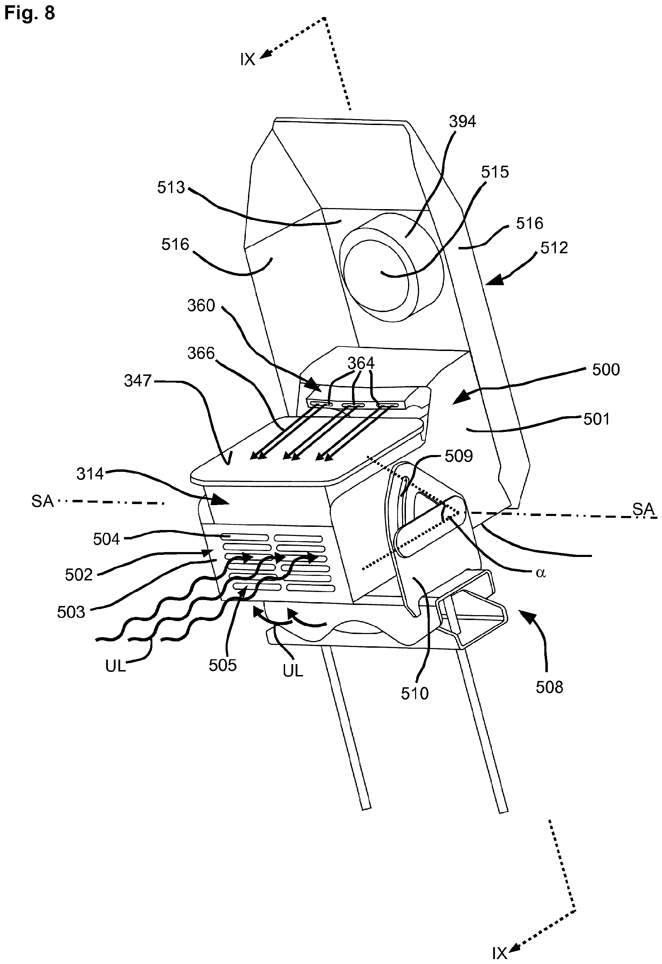

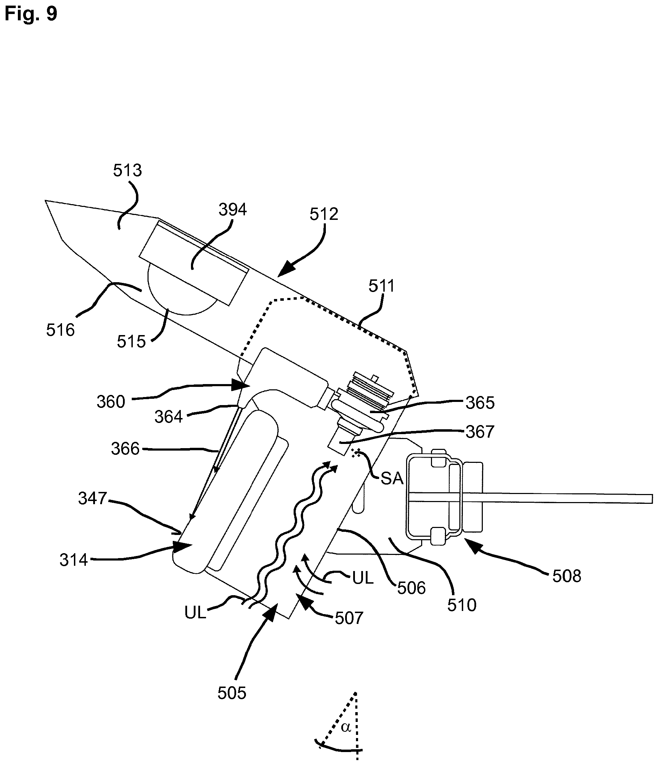

Unter gleichzeitiger Bezugnahme auf die Figur 8 (schematische Perspektivdarstellung) und die Figur 9 (Schnittdarstellung) wird nachfolgend eine Radareinheit 314 beschrieben, die in einem Strömungsbauteil 500 angeordnet bzw. aufgenommen ist. Ferner ist in dem Strömungsbauteil 500 eine Gebläsevorrichtung 360 angeordnet. Die Gebläsevorrichtung 360 umfasst mehrere, hier beispielhaft drei, Düsen 364, durch die ein Fluidstrom 366 entlang einer Außenfläche 347 der Radareinheit 314 erzeugt wird. Das Strömungsbauteil 500 umfasst zwei seitliche Wandungen 501, von denen in der Darstellung der Fig. 8 nur eine sichtbar ist. An einer Unterseite 502, die sich zwischen den beiden Seitenwandungen 501 befindet, ist ein Schutzelement 503 vorgesehen. Das Schutzelement 503 kann beispielsweise ein blechartiges Bauteil sein mit mehreren langlochartigen Öffnungen 504. Das Schutzelement 503 deckt eine untere Ansaugöffnung 505 ab, durch die Umgebungsluft UL von unten angesaugt werden kann. An dem Schutzelement 503 kann eine nicht dargestellte Filtervorrichtung angeordnet sein. Beispielsweise kann das Schutzelement 503 eine Matte aus porösem Material enthalten, die Niederschlag, wie beispielswiese Schneeflocken oder Regentropfen, zurückhält, Umgebungsluft UL jedoch nahezu ungehindert durchlässt.

Alternativ oder ergänzend zu der unteren Ansaugöffnung 505 kann an einer Rückseite 506 des Strömungsbauteils 500 eine hintere Ansaugöffnung 507 vorgesehen sein, durch die Umgebungsluft UL von hinten angesaugt werden kann. Durch eine Ansaugöffnung 505, 507 angesaugte Umgebungsluft UL strömt innerhalb des Strömungsbauteils 500 in Richtung der Gebläsevorrichtung 360, insbesondere wird die Umgebungsluft UL nach oben gefördert. Die Gebläsevorrichtung 360 umfasst an einem von den Düsen 364 abgewandten Abschnitt eine Antriebseinheit 365, insbesondere einen Elektromotor, auf. Die Antriebseinheit 365 versetzt einen nicht sichtbaren Rotor im Inneren der Gebläsevorrichtung 360 in Bewegung, so dass aufsteigende Umgebungsluft UL durch einen Ansaugstutzen 367 in die Gebläsevorrichtung 360 eintritt. Die angesaugte Umgebungsluft UL wird in der Gebläsevorrichtung 360 beschleunigt und verlässt diese als gerichteter Fluidstrom 366 durch die Düsen 364 wieder. Durch die beim Betrieb der Antriebsvorrichtung 365 entstehende Abwärme kann die durch die Gebläsevorrichtung 360 geförderte Umgebungsluft UL erwärmt werden, so dass durch die Düsen 364 ein erwärmter Fluidstrom 366 austritt. Alternativ oder ergänzend kann die Gebläsevorrichtung 364 auch eine zusätzliche Einrichtung zum Aufheizen der Umgebungsluft UL aufweisen.

Das Strömungsbauteil 500 kann bezogen auf eine zugeordnete Trägerstruktur 508 schwenkbar an der Trägerstruktur 508 befestigt werden. Insbesondere ist das Strömungsbauteil 500 um eine Schwenkachse SA drehbar bzw. schwenkbar gelagert. Die Schwenkstellung des Strömungsbauteils 500 ist wähbar und in einer belibigen Position fixierbar. Der Schwenkwinkel α kann von 0° bis 50° eingestellt werden. Die Führung des Strömungsbauteils 500 entlang verschiedener Positionen erfolgt mittels einer beidseitig vorgesehenen Kulissenführung 509, die in e-nem plattenartigen Abschnitt 510 der Tragstruktur vorgesehen ist. Das Fixieren des Strömungsbauteils 500 an der Tragstruktur 508, insbesondere an den seitlich vorgesehenen plattenartigen Abschnitten 510 kann mittels Schrauben-Mutter-Verbindungen erfolgen, die hier nicht explizit dargestellt sind. Das Fixieren in einem gewünschten Winkel α kann auch mittels vorgegebener Rasten, die z.B. entlang der Kulissenführung 509 ausgebildet sind, erfolgen in Kombination mit einer federvorgespannten Rasteinrichtung. Da die Radareinheit 314 und die Gebläsevorrichtung 360 an dem Strömungsbauteil 500 angebracht sind, können diese Beuteile gemeinsam um die Schwenkachse SA verschwenkt werden, ohne, dass sich ihre Relativposition zueinander verändert. Es ist daher nicht erforderlich, die Radareinheit 314 und die Gebläsevorrichtung 360 zueinander neu auszurichten, wenn der Schwenkwinkel α verändert wird.

An einer Oberseite 511 (in Fig. 9 gestrichelt dargestellt) des Strömungsbauteils 500 kann ein optionales Schutzelement 512 angeordnet sein. Das Schutzelement 512 weist einen über die Außenfläche 347 der Radareinheit 314 hinausragenden Schutzvorsprung 513 auf. Der Schutzvorsprung 513 bildet eine Art Vordach des Strömungsbauteils 500. An einer Innenseite 514 des Schutzvorsprungs 513 kann optional eine Bilderfassungseinrichtung 394 angebracht sein. Die Bilderfassungseinrichtung 394 kann auch als Wärmebildkamera ausgeführt sein. Die hier beispielhaft dargestellte Bilderfassungseinrichtung 394 ist eine Art Deckenkamera mit einem halbkugelartigen Gehäuse 515. Die Bilderfassungseinrichtung 394 ist dazu eingerichtet, Bilder oder Wärmebilder von der Radareinheit 314, insbesondere von der Außenfläche 347 aufzunehmen. Hierdurch können beispielsweise Anhaftungen, wir etwa trockener Schnee, an der Außenfläche 347 bereits zu einem frühen Zeitpunkt festgestellt werden, auch wenn diese Anhaftungen ggf. noch keinen oder keinen großen Einfluss auf gemessene elektromagnetische Strahlung haben. Das Schutzelement 512, gegebenenfalls mit daran angebrachten Bildaufnahmeeinrichtung 394, kann ebenfalls gemeinsam mit dem Strömungsbauteil 500 um die Schwenkachse SA bewegt bzw. verschwenkt werden. Das Schutzelement 512 weist ferner seitliche Schutzabschnitte 516 auf. Die Schutzabschnitte 516 sind dabei geneigt ausgeführt, derart, dass sie Ferner sind die Schutzabschnitte 516 derart dimensioniert, dass die Bildaufnahmeeinrichtung 394 durch die Schutzabschnitts seitlich geschützt ist, etwa gegen Niederschlag, aber auch gegen Lichteinfall.

Das hier vorgestellte Strömungsbauteil 500 kann mit jeder der oben vorgestellten Gebläsevorrichtungen 60, 160, 260 eingesetzt werden. Insofern ist das Beispiel der Fig. 8 und 9 nicht auf die dort gezeigte Gebläsevorrichtung 360 eingeschränkt. Ferner kann auch das Schutzelement 512 und gegebenenfalls die darin aufgenommene Bildaufnahmeeinrichtung 394 mit anderen oben vorgestellten Ausführungsformen des Radarsystems kombiniert, insbesondere auch mit einem Wischer als Räumvorrichtung. Entsprechend ist die Verwendung eines Schutzelements 512 nicht auf das Beispiel der Figuren 8 und 9 eingeschränkt.

Wird eine andere Räumeinrichtung als ein Gebläse verwendet, kann das Strömungsbauteil 500 auch als Träger für die Radareinheit und beispielsweise einer Wischervorrichtung eingesetzt werden, ggf. mit konstruktiven und dimensionsbezogenen Anpassungen am Strömungsbauteil 500, das dann eher die Funktion eines Modulgehäuses aufweist.

Ferner wird darauf hingewiesen, dass alles was in Bezug auf die Figuren 1 bis 7 erläutert worden ist, wie beispielsweise die dort gezeigte Ausgestaltung der Radareinheit 14, bzw. der grundsätzliche Systemaufbau etc., mit Merkmalen kombiniert werden kann, die in Bezug auf die Figuren 8 und 9 gezeigt sind. Beispielsweise kann also eine in Figur 1 oder 2 dargestellte Radareinheit 14 eine Radareinheit 314 der Fig. 8 und 9 sein, die in einem Strömungsbauteil 500 angeordnet ist. Ferner kann eine in Figur 8 und 9 dargestellte Radareinheit 314 auch einen gleichen oder ähnlichen Aufbau aufweisen, wie die in Figur 7 dargestellte Radareinheit 14.

## Patentansprüche

1. Radarsystem zum Erfassen von Objektbewegungen in einem vorbestimmten Zielbereich (12), insbesondere zum Erfassen von einzelnen Objekten, Ansammlungen von Objekten, Erdbewegungen, Schneebewegungen und dergleichen, mit
wenigstens einer Radareinheit (14), die wenigstens eine Sendeeinheit (80), insbesondere Sendeantenne, umfasst, die dazu eingerichtet ist, elektromagnetische Strahlung (16) auszusenden, und die wenigstens eine Empfangseinheit (82), insbesondere Empfangsantenne, umfasst, die dazu eingerichtet ist, reflektierte elektromagnetische Strahlung (16) zu empfangen,
wenigstens einer Auswerteeinheit (84), die dazu eingerichtet ist, auf Basis der ausgestrahlten und empfangenen Strahlung (16) und auf Basis von zugeordneten Zeitmessungen, Objektbewegungen in dem vorbestimmten Zielbereich (12) zu erfassen und für eine erfasste Objektbewegung zu entscheiden, ob es eine gesuchte Objektbewegung ist,
wenigstens einer Abdeckeinrichtung (44), wobei die Sendeeinheit (80) und die Empfangseinheit (82) bezogen auf eine auf den Zielbereich (12) gerichtete Hauptstrahlungsrichtung der Sendeeinheit (80) hinter der Abdeckeinrichtung (44) angeordnet sind oder hinter einer jeweiligen Abdeckungseinrichtung angeordnet sind, um die Sendeeinheit (80) und die Empfangseinheit (82) zu schützen, und
wobei an der Radareinheit (14) wenigstens eine Räumeinrichtung (60; 160;260; 70) vorgesehen ist, die dazu eingerichtet ist, Ablagerungen, insbesondere Wasser, Schnee und dergleichen, die auf einer Außenfläche (47) der wenigstens einen Abdeckeinrichtung (44) anhaften oder anliegen, zu entfernen,
wobei die Auswerteeinheit (84) dazu eingerichtet ist, auf der Basis von der empfangenen elektromagnetischen Strahlung (16) zu bestimmen, ob an der Außenfläche (47) Ablagerungen vorhanden sind oder nicht, und zu entscheiden ob die Räumeinrichtung (60; 160; 260, 70) aktiviert wird oder nicht, und wobei die Räumeinrichtung als Gebläsevorrichtung (60; 160; 260) ausgebildet ist, die dazu eingerichtet ist, einen Fluidstrom (66; 166; 266) entlang der Außenfläche (47) der Abdeckeinrichtung (44) zu erzeugen, um anhaftende oder anliegende Wassertropfen oder Schneeansammlungen zu entfernen,
**dadurch gekennzeichnet, dass** die Gebläsevorrichtung (360) und die Radareinheit (314) an einem gemeinsamen Strömungsbauteil (500) angebracht sind, das wenigstens eine Ansaugöffnung (505, 507) aufweist, durch die Umgebungsluft (UL) in das Strömungsbauteil (500) gelangt, und das derart ausgebildet ist, dass angesaugte Umgebungsluft (UL) nach Umlenkung durch die Gebläsevorrichtung (360) als Fluidstrom (366) entlang der Außenfläche (347) der Abdeckeinrichtung (344) austritt.

2. Radarsystem nach Anspruch 1, **dadurch gekennzeichnet, dass** die Sendeeinheit (80) und die Empfangseinheit (82) in einem Radargehäuse (40) angeordnet sind, wobei das Radargehäuse (40) zumindest eine Basis (42) und die Abdeckeinrichtung (44) aufweist.

3. Radarsystem nach Anspruch 1 oder 2, **dadurch gekennzeichnet, dass** die Auswerteeinheit (84) dazu eingerichtet ist, eine Amplitude von reflektierter elektromagnetischer Strahlung (16) zu bestimmen oder/und eine Differenz von reflektierter elektromagnetischer Strahlung zu bestimmen, die durch verschiedene Empfangseinheiten (82) empfangen worden ist.

4. Radarsystem nach einem der vorhergehenden Ansprüche, **dadurch gekennzeichnet, dass** die Gebläsevorrichtung (60; 160; 260) im Bereich eines ersten Randes (52) der Abdeckeinrichtung (44) angeordnet ist und eine Hauptströmungsrichtung des Fluidstroms (66; 166;266) zu einem zweiten Randbereich (54) gerichtet ist, wobei der zweite Randbereich (54) dem ersten Randbereich (52) gegenüber liegt.

5. Radarsystem nach Anspruch 4, **dadurch gekennzeichnet, dass** die Radareinheit (14) in einem montierten Zustand so ausgerichtet ist, dass der erste Randbereich (52) höher liegt als der zweite Randbereich (54).

6. Radarsystem nach einem der vorhergehenden Ansprüche, **dadurch gekennzeichnet, dass** das Strömungsbauteil (500) bezogen auf die an einer Vorderseite des Strömungsbauteils (500) angebrachte Radareinheit (314) eine untere Ansaugöffnung (505) oder/und eine hintere Ansaugöffnung (507) aufweist.

7. Radarsystem nach einem der vorhergehenden Ansprüche, **dadurch gekennzeichnet, dass** das Strömungsbauteil (500) derart ausgebildet ist, dass es schwenkbar an einer Trägervorrichtung (508) anbringbar oder angebracht ist.

8. Radarsystem nach Anspruch 7, **dadurch gekennzeichnet, dass** das Strömungsbauteil (500) gemeinsam mit der Radareinheit (314) und der Gebläsevorrichtung (360) schwenkbar ist, insbesondere um einen Schwenkwinkel (a) von 0° bis 50°.

9. Radarsystem nach einem der vorhergehenden Ansprüche, **dadurch gekennzeichnet, dass** an einem oberen Abschnitt (511) des Strömungsbauteils (500) ein Schutzelement (512) angebracht ist mit einem über die Radareinheit (314), insbesondere deren Außenfläche (347), hinausragenden Schutzvorsprung (513).

10. Radarsystem nach einem der vorhergehenden Ansprüche, **dadurch gekennzeichnet, dass** die Außenfläche (47) der Abdeckeinrichtung (44) eine hydrophobe Beschichtung aufweist.

11. Radarsystem nach einem der vorhergehenden Ansprüche, ferner umfassend wenigstens eine Bildaufnahmeeinrichtung (94, 394), die dazu eingerichtet ist, ein Bild von wenigstens einem Teil der Außenfläche (47) aufzunehmen und das Bild an die Auswerteeinheit (84) zu übertragen.

12. Radarsystem nach Anspruch 11, **dadurch gekennzeichnet, dass** die Auswerteeinheit (84) dazu eingerichtet ist, ein aufgenommenes Bild automatisiert auszuwerten und zu bestimmen, ob auf der Außenfläche Ablagerungen vorhanden sind oder nicht und zu entscheiden, ob die Räumeinrichtung (60; 160; 260; 70) aktiviert wird oder nicht.

13. Radarsystem nach Anspruch 11 oder 12 und nach Anspruch 9, **dadurch gekennzeichnet, dass** die Bildaufnahmeeinrichtung (394) an einer der Radareinheit (314) zugewandten Innenseite (514) des Schutzelements (512), insbesondere des Schutzvorsprungs (513), angebracht ist.

14. Radarsystem nach Anspruch 13, **dadurch gekennzeichnet, dass** die Bildaufnahmeeinrichtung (394) gemeinsam mit dem Strömungsbauteil (500) schwenkbar ist.

15. Radarsystem nach einem der vorhergehenden Ansprüche, **dadurch gekennzeichnet, dass** die Auswerteeinheit (84) über ein Netzwerk (86) mit einer Zentraleinheit (30) verbunden ist, wobei die Zentraleinheit (30) dazu eingerichtet ist, dass einer Bedienperson Informationen der Radareinheit (14), insbesondere über detektierte Bewegungen, Massebewegungen, Temperatur, Vorhandensein von Ablagerungen und dergleichen, bereitgestellt werden können.

## Claims

1. A radar system for sensing object movements in a predefined target area (12), in particular, for sensing individual objects, accumulations of objects, earth movements, snow movements and the like, comprising:
at least one radar unit (14), which comprises at least one transmitting unit (80), in particular, transmitting antenna, which is designed to emit electromagnetic radiation (16), and which comprises at least one receiving unit (82), in particular, receiving antenna, which is designed to receive reflected electromagnetic radiation (16);
at least one evaluating unit (84), which is designed, on the basis of the radiation (16) emitted and received and on the basis of associated time measurements, to sense object movements in the predefined target area (12) and to decide for a sensed object movement whether it is a sought-after object movement;
at least one covering device (44), wherein the transmitting unit (80) and the receiving unit (82) are, related to a main radiation direction of the transmitting unit (80) directed toward the target area (12), arranged behind the covering device (44) or are each arranged behind a respective covering device, in order to protect the transmitting unit (80) and the receiving unit (82), and
wherein at least one clearing device (60; 160; 260; 70) is provided on the radar unit (14), which is designed to remove deposits, in particular, water, snow and the like, which adhere to or lie on an outer surface (47) of the at least one covering device (44),
wherein the evaluating unit (84) is designed, on the basis of the electromagnetic radiation (16) received, to determine whether deposits are present on the outer surface (47) or not, and to decide whether the clearing device (60; 160; 260, 70) becomes activated or not, and wherein the clearing device is configured as a blower device (60; 160; 260), which is designed to generate a fluid flow (66; 166; 266) along the outer surface (47) of the covering device (44), in order to remove adhering or adjacent water drops or snow accumulation,
**characterized in that** the blower device (360) and the radar unit (314) are arranged on a common flow component (500), which includes at least one suction opening (505, 507) through which ambient air (UL) enters the flow component (500) and which is configured in such a manner that sucked in ambient air (UL), after redirection by the blower device (360), exits as a fluid flow (366) along the outer surface (347) of the covering device (344).

2. The radar system according to claim 1, **characterized in that** the transmitting unit (80) and the receiving unit (82) are arranged within a radar housing (40), wherein the radar housing (40) includes at least a basis (42) and the covering device (44).

3. The radar system according to claim 1 or 2, **characterized in that** the evaluating unit (84) is designed to determine an amplitude of reflected electromagnetic radiation (16) and/or determine a difference of reflected electromagnetic radiation, which has been received by various receiving units (82).

4. The radar system according to any one of the preceding claims, **characterized in that** the blower device (60; 160; 260) is arranged in the area of a first edge (52) of the covering device (44), and a main flow direction of the fluid flow (66; 166; 266) is directed towards a second edge area (54), wherein the second edge area (54) lies opposite to the first edge area (52).

5. The radar system according to claim 4, **characterized in that** the radar unit (14) is, in an assembled state, aligned in such a manner that the first edge area (52) is located higher than the second edge area (54).

6. The radar system according to any one of the preceding claims, **characterized in that** the flow component (500), related to the radar unit (314) mounted on a front side of the flow component (500), includes a bottom suction opening (505) and/or a rear suction opening (507).

7. The radar system according to any one of the preceding claims, **characterized in that** the flow component (500) is configured in such a manner that it is pivotably mountable or mounted on a support device (508).

8. The radar system according to claim 7, **characterized in that** the flow component (500) is, together with the radar unit (314) and the blower device (360), pivotable, in particular, at a pivot angle (a) from 0° to 50°.

9. The radar system according to any one of the preceding claims, **characterized in that** a protective element (512) with a protective nose (513) protruding beyond the radar unit (314), in particular, its outer surface (347), is arranged on an upper section (511) of the flow component (500).

10. The radar system according to any one of the preceding claims, **characterized in that** the outer surface (47) of the covering unit (44) has a hydrophobic coating.

11. The radar system according to any one of the preceding claims, further comprising at least one image taking device (94, 394), which is designed to take an image of at least one portion of the outer surface (47) and transmit the image to the evaluating unit (84).

12. The radar system according to claim 11, **characterized in that** the evaluating unit (84) is designed to automatically evaluate an image taken and to determine whether deposits are present on the outer surface or not, and to decide whether the clearing device (60; 160; 260, 70) becomes activated or not.

13. The radar system according to claim 11 or 12 and according to claim 9, **characterized in that** the image taking device (394) is mounted on an interior side (514) of the protective element (512), in particular, of the protective nose (513), facing the radar unit (314).

14. The radar system according to claim 13, **characterized in that** the image taking device (394) is pivotable together with the flow component (500).

15. The radar system according to any one of the preceding claims, **characterized in that** the evaluating unit (84) is connected to a central unit (30) via a network (86), wherein the central unit (30) is designed such that information from the radar unit (14), in particular, regarding detected movements, mass movements, temperature, presence of deposits and the like, can be provided to an operator.

## Revendications

1. Système radar pour détecter des mouvements d'objets dans une zone cible prédéterminée (12), en particulier pour détecter des objets individuels, des accumulations d'objets, des mouvements de terre, des mouvements de neige et autres, comprenant
au moins une unité radar (14) qui comprend au moins une unité d'émission (80), en particulier une antenne d'émission, qui est installée pour émettre un rayonnement électromagnétique (16), et qui comprend au moins une unité de réception (82), en particulier une antenne de réception, qui est installée pour recevoir un rayonnement électromagnétique (16) réfléchi,
au moins une unité d'interprétation (84) qui est installée pour, sur la base du rayonnement (16) répandu et reçu et sur la base de mesures de temps associées, détecter des mouvements d'objet dans la zone cible prédéterminée (12) et décider pour un mouvement d'objet détecté si c'est un mouvement d'objet recherché,
au moins un dispositif de recouvrement (44), dans lequel l'unité d'émission (80) et l'unité de réception (82), par rapport à une direction de rayonnement principal de l'unité d'émission (80) dirigée vers la zone cible (12), sont disposées derrière le dispositif de recouvrement (44) ou sont disposés derrière un dispositif de recouvrement respectif pour protéger l'unité d'émission (80) et l'unité de réception (82), et
dans lequel il est prévu sur l'unité radar (14) au moins un dispositif de dégagement (60 ; 160 ; 260 ; 70) qui est installé pour enlever des dépôts, en particulier de l'eau, de la neige et autres, qui adhèrent ou sont appliqués sur une surface extérieure (47) du au moins un dispositif de recouvrement (44),
dans lequel l'unité d'interprétation (84) est installée pour déterminer, sur la base du rayonnement électromagnétique (16) reçu, s'il y a des dépôts sur la surface extérieure (47) ou pas, et pour décider si on active le dispositif de dégagement (60 ; 160 ; 260 ; 70) ou pas, et dans lequel le dispositif de dégagement est formé en tant que dispositif à soufflante (60 ; 160 ; 260) qui est installé pour produire un courant de fluide (66 ; 166 ; 266) le long de la surface extérieure (47) du dispositif de recouvrement (44), pour enlever des gouttes d'eau ou des accumulations de neige qui adhèrent ou sont appliquées,
**caractérisé en ce que** le dispositif à soufflante (360) et l'unité radar (314) sont montés sur un composant d'écoulement commun (500) qui présente au moins une ouverture d'aspiration (505, 507) par laquelle l'air ambiant (UL) arrive dans le composant d'écoulement (500) et qui est formé de telle sorte que l'air ambiant (UL) aspiré, après avoir été dévié par le dispositif à soufflante (360), sorte en tant que courant de fluide (366) le long de la surface extérieure (347) du dispositif de recouvrement (344).

2. Système radar selon la revendication 1, **caractérisé en ce que** l'unité d'émission (80) et l'unité de réception (82) sont disposées dans un boîtier de radar (40), dans lequel le boîtier de radar (40) présente au moins une base (42) et le dispositif de recouvrement (44).

3. Système radar selon la revendication 1 ou 2, **caractérisé en ce que** l'unité d'interprétation (84) est installée pour déterminer une amplitude de rayonnement électromagnétique (16) réfléchi ou/et déterminer une différence de rayonnement électromagnétique réfléchi qui a été reçu par différentes unités de réception (82).

4. Système radar selon l'une des revendications précédentes, **caractérisé en ce que** le dispositif à soufflante (60 ; 160 ; 260) est disposé dans la zone d'un premier bord (52) du dispositif de recouvrement (44) et une direction d'écoulement principale du courant de fluide (66 ; (166 ; 266) est dirigée vers une deuxième zone de bord (54), dans lequel la deuxième zone de bord (54) est opposée à la première zone de bord (52).

5. Système radar selon la revendication 4, **caractérisé en ce que** l'unité radar (14), dans un état monté, est orientée de telle sorte que la première zone de bord (52) se trouve plus haut que la deuxième zone de bord (54).

6. Système radar selon l'une des revendications précédentes, **caractérisé en ce que** le composant d'écoulement (500) présente, par rapport à l'unité radar (314) montée sur un côté avant du composant d'écoulement (500), une ouverture d'aspiration inférieure (505) ou/et une ouverture d'aspiration arrière (507).

7. Système radar selon l'une des revendications précédentes, **caractérisé en ce que** le composant d'écoulement (500) est formé de manière à pouvoir être monté ou à être monté pivotant sur un dispositif de support (508).

8. Système radar selon la revendication 7, **caractérisé en ce que** le composant d'écoulement (500) est apte à pivoter conjointement à l'unité radar (314) et le dispositif à soufflante (360), en particulier d'un angle de pivotement (a) de 0° à 50°.

9. Système radar selon l'une des revendications précédentes, **caractérisé en ce que** sur une section supérieure (511) du composant d'écoulement (500) est monté un élément de protection (512) avec une saillie de protection (513) qui dépasse de l'unité radar (314), en particulier de la surface extérieure (347) de celle-ci.

10. Système radar selon l'une des revendications précédentes, **caractérisé en ce que** la surface extérieure (47) du dispositif de recouvrement (44) présente un revêtement hydrophobe.

11. Système radar selon l'une des revendications précédentes, comprenant en outre au moins un dispositif d'enregistrement d'image (94, 394) qui est installé pour enregistrer une image d'une partie au moins de la surface extérieure (47) et transmettre l'image à l'unité d'interprétation (84).

12. Système radar selon la revendication 11, **caractérisé en ce que** l'unité d'interprétation (84) est installée pour interpréter de manière automatisée une image enregistrée et déterminer s'il y a sur la surface extérieure des dépôts ou pas et décider si on active le dispositif de dégagement (60 ; 160 ; 260 ; 70) ou pas.

13. Système radar selon la revendication 11 ou 12 et selon la revendication 9, **caractérisé en ce que** le dispositif d'enregistrement d'image (394) est monté d'un côté intérieur (514) de l'élément de protection (512), en particulier de la saillie de protection (513), tourné vers l'unité radar (314).

14. Système radar selon la revendication 13, **caractérisé en ce que** le dispositif d'enregistrement d'image (394) est apte à pivoter conjointement au composant d'écoulement (500).

15. Système radar selon l'une des revendications précédentes, **caractérisé en ce que** l'unité d'interprétation (84) est reliée par un réseau (86) à une unité centrale (30), dans lequel l'unité centrale (30) est installée pour que des informations de l'unité radar (14), en particulier sur des mouvements, mouvements de masse, température, présence de dépôts et autres, détectés puissent être fournies à un utilisateur.
